# EUROPÄISCHE PATENTANMELDUNG

(11) **EP 3 220 094 A1**
(43) Veröffentlichungstag der Anmeldung: **20.09.2017**
(21) Anmeldenummer: 17000339.6
(22) Anmeldetag: 06.03.2017
(51) Int. Cl.: F41G 7/00, F41G 7/22, F41G 7/30, G01S 13/87, G01S 13/88

(54) **VERFAHREN ZUM STEUERN EINES FLUGKÖRPERS ZU EINEM FLIEGENDEN ZIEL**

(30) Priorität: 16.03.2016 DE 102016003238
(71) Anmelder: Diehl Defence GmbH & Co. KG, 88662 ÜBERLINGEN (DE)
(72) Erfinder: Kuhn, Thomas, 88633 Heiligenberg (DE)
(74) Vertreter: Diehl Patentabteilung

(57) **Zusammenfassung**

Die Erfindung geht aus von einem Verfahren zum Steuern eines Flugkörpers (2) zu einem fliegenden Ziel (26).
Um auch bei witterungsbedingten Sichtstörungen einen präzisen Anflug auf das Ziel (26) zu ermöglichen, wird vorgeschlagen, dass ein vom Flugkörper (2) entferntes Radar (28) das Ziel (26) erfasst und Daten zu einem ersten Aufenthaltsbereich (30) des Ziels (26) an den Flugkörper (2) sendet, der Flugkörper (2) aus den Daten eines eigenen Flugkörperradars (20) einen zweiten Aufenthaltsbereich (38) des Ziels (26) bestimmt, beide Aufenthaltsbereiche (30, 38) zu einem Zielbereich (40, 44) verarbeitet und zum Zielbereich (40, 44) fliegt.

## Beschreibung

Die Erfindung betrifft ein Verfahren zum Steuern eines Flugkörpers zu einem fliegenden Ziel.

Bei einer bodengestützten Luftabwehr wird ein fliegendes Ziel von einem Bodenradar erfasst, und es wird aus den Radardaten ein Aufenthaltsbereich des Ziels im Luftraum bestimmt. Daten zu diesem Aufenthaltsbereich werden an einen Flugkörper zur Luftabwehr gesendet, der das Ziel anhand dieser Daten ansteuert. Bei einer solchen externen Einweisung per Datenlink besteht jedoch das Problem, dass die zur Einweisung übermittelten Zieldaten fehlerbehaftet und ausfallgefährdet sind und zudem den Flugkörper nur zeitverzögert erreichen. Entsprechend fehlerhaft sind die vom Lenkfilter des Flugkörpers geschätzten Zustandsgrößen des Ziels. Ein Anflug ist daher nur unpräzise möglich.

Zum präzisen Endanflug umfassen moderne Systeme zur Luftzielbekämpfung auf mittlere Reichweite beispielsweise ein bildauflösendes Infrarot-Suchsystem, mit dem das angeflogene Ziel bildhaft erfasst wird. Auf der Grundlage der Bilddaten kann der Flugkörper einen Aufenthaltsbereich des Ziels mit hoher Präzision bestimmen, auf das Ziel zufliegen und es effektiv bekämpfen.

Es ist eine Aufgabe der vorliegenden Erfindung, ein verbessertes Verfahren zum Steuern eines Flugkörpers zu einem fliegenden Ziel anzugeben.

Diese Aufgabe wird durch ein Verfahren der eingangs genannten Art gelöst, bei dem erfindungsgemäß ein vom Flugkörper entferntes Radar das Ziel erfasst und Daten zu einem ersten Aufenthaltsbereich des Ziels an den Flugkörper sendet, der Flugkörper aus den Daten eines eigenen Flugkörperradars einen zweiten Aufenthaltsbereich des Ziels bestimmt, beide Aufenthaltsbereiche zu einem Zielbereich verarbeitet und zum Zielbereich fliegt.

Die Erfindung geht von der Überlegung aus, dass der Flugkörper - bis zu einer Aufschaltung eines eventuell vorhandenen Nahbereichssuchers auf das Ziel - ausschließlich anhand der Daten des entfernten Radars zum ersten Aufenthaltsbereichs des Ziels gesteuert wird. Zwar wird ein prädizierter Begegnungspunkt beziehungsweise predicted impact point (PIP) aus dem ersten Aufenthaltsbereich berechnet, auf den der Flugkörper gerichtet wird, dieser kann aufgrund eines Einweisungsfehlers jedoch relativ weit vom tatsächlichen Ziel bzw. Begegnungspunkt entfernt liegen. Ohne Nahbereichssucher fliegt der Flugkörper weit am Ziel vorbei. Ist ein Nahbereichssucher vorhanden, wird bei dessen Aufschaltung auf das Ziel der Einweisungsfehler sichtbar und kann kompensiert werden. Nach der Aufschaltung muss als notwendige Bedingung für einen Treffer der Einweisungsfehler in der verbleibenden Flugzeit des Flugkörpers bis zum Ziel vollständig abgebaut werden. Hierfür liegt die Detektionsreichweite beispielsweise passiver Infrarot-Sucher bei klarer Sicht bei einem Vielfachen der von der notwendigen Treffbedingung vorgegebenen Mindestdetektionsreichweite. Bei günstigen Witterungsbedingungen verfügt der Flugkörper daher über eine großzügige Lenkreserve, auch um unerwarteten Zielmanövern des Ziels zu begegnen. Die Detektionsreichweite kann jedoch durch witterungsbedingte Einflüsse beschränkt sein. Wird das Ziel aufgrund meteorologischer Verhältnisse erst unterhalb der Mindestdetektionsreichweite auf den Nahbereichssucher aufgeschaltet, ist ein Treffer nicht mehr garantiert.

Zur Lösung dieses Problems ist der Flugkörper mit einem Flugkörperradar ausgestattet, der auch bei nicht vorhandener Sicht auf das Ziel, das Ziel bereits erfassen kann beziehungsweise Daten zum Ziel ermittelt. Hierbei ist es ausreichend, wenn beispielsweise nur Entfernungsdaten ermittelt werden. Die vom Flugkörperradar ermittelten Daten sind zwar für eine eigenständige Einweisung gegebenenfalls nicht ausreichend, da beispielsweise eine Richtungsangabe fehlt, sie können jedoch zusammen mit dem vom entfernten Radar ermittelten Daten vom ersten Aufenthaltsbereichs des Ziels zu einem ausreichend präzisen Zielbereich verarbeitet werden. Ist beispielsweise der vom entfernten Radar ermittelte erste Aufenthaltsbereich des Ziels zu groß, um eine präzise Lenkung des Flugkörpers in der Endphase des Anflugs zu ermöglichen, so kann eine Verknüpfung der Aufenthaltswahrscheinlichkeiten des Ziels im ersten und im zweiten Aufenthaltsbereich zu einem kleineren Zielbereich führen, der innerhalb der Mindestdetektionsreichweite liegt. Selbst wenn das Ziel in einer Wolke liegt und auch bis zur Bekämpfung nicht optisch erfasst werden kann, kann der Zielbereich so klein sein, dass eine Bekämpfung auch gänzlich ohne Sicht möglich ist.

Der Flugkörper ist zweckmäßigerweise ein Flugkörper zur bodengestützten Flugabwehr mit einem Raketenmotor und insbesondere mit einem Suchkopf mit einem Suchsystem zur zweidimensionalen Winkelerfassung des Ziels in Azimut- und Elevationsrichtung zur Flugkörperachse. Das im Folgenden als bildverarbeitendes Suchsystem oder Nahbereichssucher bezeichnete System kann ein passives Infrarot-Suchsystem sein mit einem im infraroten Spektralbereich empfindlichen Detektor, mit dem eine Bilderfassung der Umgebung durchgeführt wird. Ebenfalls möglich ist ein aktiver Radarsucher, mit dem eine richtungsaufgelöste Zielerfassung - aufgrund der benötigten Energiezufuhr ebenfalls erst in der Endphase des Anflugs - ermöglicht wird.

Das vom Flugkörper entfernte Radar kann ein Bodenradar sein oder ein Radar eines Luftfahrzeugs. Das Flugkörperradar umfasst zweckmäßigerweise einen Radarsensor, der relativ zu einem Außengehäuse des Flugkörpers unbeweglich ist. Hierdurch kann die Radarsensortechnik besonders einfach und kostengünstig gehalten werden. Diese Daten des Radarsensors können von einer Steuereinheit des Flugkörpers ausgewertet werden, wobei zur Kosten-, Bauraum- und Gewichtsersparnis zweckmäßigerweise nur Entfernungsdaten aus den Daten des Radarsensors ermittelt werden.

Die Aufenthaltsbereiche müssen keine streng abgegrenzten Bereiche im Luftraum sein. Ein Aufenthaltsbereich kann eine Wahrscheinlichkeitsverteilung im Raum sein, mit oder ohne Begrenzung, z.B. eine Verteilung der Aufenthaltswahrscheinlichkeit des Ziels im Raum. Das Gleiche gilt für den Zielbereich. Falls eine räumliche Begrenzung der Aufenthaltsbereiche bzw. des Zielbereichs erfolgt, kann diese beispielsweise geschehen durch die Zusammenfassung all derjenigen Bereiche, in der die Aufenthaltswahrscheinlichkeit über einem vorbestimmten Grenzwert liegt.

Die Verarbeitung der beiden Aufenthaltsbereiche zu einem Zielbereich kann durch eine Fusion der Daten der beiden Aufenthaltsbereiche durch gemeinsamen Eingang in einen Zustandsfilter erreicht werden. Der Verarbeitung beider Aufenthaltsbereiche zu einem Zielbereich kommt es gleich, wenn Aufenthaltswahrscheinlichkeitsdaten des entfernten Radars und des Flugkörperradars zum Zielbereich verarbeitet werden. Dies kann durch eine Datenfusion erfolgen, beispielsweise durch Eingabe der Daten des Flugkörperradars und des entfernten Radars in einem Zustandsschätzer, beispielsweise einem Kalman-Filter. Die Daten zu den Aufenthaltsbereichen enthalten vorteilhafterweise eine zwei- oder dreidimensionale Funktion der Aufenthaltswahrscheinlichkeit des Ziels in Abhängigkeit vom Ort. Auch eine Aufteilung der Aufenthaltsbereiche jeweils in eine Vielzahl von Unterbereichen verschiedener Aufenthaltswahrscheinlichkeiten kann als eine solche Funktion verstanden werden. Die ortsabhängige Aufenthaltswahrscheinlichkeit wird zweckmäßigerweise durch einen Zustandsfilter bestimmt, beispielsweise einen Kalman-Filter.

In einer vorteilhaften Ausführungsform der Erfindung werden ortsaufgelöste Aufenthaltswahrscheinlichkeiten des Ziels in beiden Aufenthaltsbereichen im Flugkörper zu einer übergeordneten ortsaufgelösten Aufenthaltswahrscheinlichkeit zusammengeführt. Aus dieser übergeordneten ortsaufgelösten Aufenthaltswahrscheinlichkeit des Ziels kann der Zielbereich bestimmt werden. Die Zusammenführung kann durch Multiplikation der Wahrscheinlichkeiten geschehen.

In einer weiteren Ausführungsform der Erfindung misst das Flugkörperradar eine Entfernung zum Ziel, und der Flugkörper, zweckmäßigerweise eine Steuereinheit des Flugkörpers, bestimmt aus den Daten der Entfernungsmessung eine Aufenthaltswahrscheinlichkeit des Ziels im zweiten Aufenthaltsbereich. Die ortsaufgelöste Aufenthaltswahrscheinlichkeit des ersten Aufenthaltsbereichs kann vom Flugkörper mit der aus der Entfernungsmessung resultierenden Aufenthaltswahrscheinlichkeit verbunden werden. Hierdurch kann ein kleiner Zielbereich zur präzisen Ansteuerung des Flugkörpers in Richtung zum Ziel bestimmt werden.

Je nach Lage des entfernten Radars zur Flugrichtung des Flugkörpers kann es sein, dass die beiden Aufenthaltsbereiche so zueinander liegen, dass deren Schnittbereiche einen ungünstig großen oder ungünstig im Raum verteilten Zielbereich ergeben. So kann es beispielsweise vorkommen, dass der Zielbereich zwei entfernt voneinander im Raum liegende Unterbereiche umfasst, in denen sich das Ziel befinden kann. Je nach Auswahl des Unterbereichs durch den Flugkörper kann hierbei das Ziel verfehlt werden. Um dies zu vermeiden ist es vorteilhaft, wenn der Flugkörper zumindest drei nach vorne ausgerichtete Radarsensoren aufweist. Die Radarsensoren sind zweckmäßigerweise in unterschiedliche Raumrichtungen - bezogen zur Flugkörperachse - ausgerichtet. Zweckmäßigerweise überwachen die Radarsensoren jeweils nur ein Raumsegment von zumindest drei nebeneinander liegenden Raumsegmenten. Die Raumsegmente können aneinander angrenzen oder einander teilweise überlappen. Durch die unterschiedliche Ausrichtung der Radarsensoren in den Raum kann aus deren Signalen eine grobe Richtungsbestimmung abgeleitet werden. Diese kann ausreichend sein, um eine Zielbereichsambivalenz zu klären und eine Fehlauswahl des Unterbereichs zu vermeiden. Zur Bestimmung des korrekten Zielbereichs können die Segmentwahrscheinlichkeiten, also Aufenthaltswahrscheinlichkeit des Ziels im jeweiligen Segment des Radarsensors, zusammen mit Aufenthaltswahrscheinlichkeiten in den beiden Aufenthaltsbereichen verarbeitet werden.

Wenn das Ziel bei Annäherung durch den Flugkörper in einer Wolke fliegt, kann es sein, dass der Flugkörper das Ziel bis zur Bekämpfung nicht durch ein Suchsystem erfassen kann. Ein ortsaufgelöstes optisches Bild, beispielsweise im infraroten Spektralbereich, kann dann zur Lenkung des Flugkörpers nicht verwendet werden. Allerdings ist aus den Daten des Flugkörperradars der Abstand des Flugkörpers zum Ziel bekannt. Fliegt der Flugkörper am Ziel vorbei, vergrößert sich der gemessene Abstand wieder, sodass aus der Entwicklung der Entfernungsdaten ein Ort größter Annäherung abgeschätzt werden kann. Im Bereich dieses Orts kann ein Wirkkörper des Flugkörpers gezündet und das Ziel auch ohne optische Sicht bekämpft werden. Insofern ist es vorteilhaft, wenn das Flugkörperradar als Annäherungssensor zum Zünden einer Wirkladung des Flugkörpers verwendet wird.

Im Vorhandensein mehrerer Radarsensoren, die in unterschiedliche Richtungen ausgerichtet sind, kann zudem eine Richtung bestimmt werden beziehungsweise ein Richtungsbereich, in dem das Ziel bei einem Vorbeiflug relativ zur Flugkörperachse liegt. Eine Bekämpfungseffektivität kann gesteigert werden, wenn die Wirkladung richtungsabhängig gezündet wird, wobei bei der Bestimmung der Zündungsrichtung Richtungsdaten des Flugkörperradars verwendet werden, beispielsweise eine Segmentnummer, in dem das Ziel liegt. Die Wirkladung kann in einen Richtungsbereich konzentriert werden, wodurch ein wirksamer Bekämpfungsradius vergrößert wird. Insofern wird zweckmäßigerweise bei einem Flug des Flugkörpers am Ziel vorbei das Raumsegment bestimmt, in dem sich das Ziel befindet, und eine Zündung der Wirkladung wird zumindest überwiegend in dieses Raumsegment hinein gesteuert. Überwiegend kann hierbei als mehr als 50 % der gesamten Wirkkraft verstanden werden. Das Raumsegment erstreckt sich zweckmäßigerweise in einem Azimutwinkelbereich von weniger als 180°, insbesondere weniger als 140° um die Flugkörperachse.

Der Anflug des Flugkörpers kann in mehrere Phasen aufgeteilt werden, in denen eine Richtungssteuerung des Flugs des Flugkörpers von Daten verschiedener Datenquellen abhängig ist. In einer Einweisungsphase erfolgt die Flugsteuerung nur oder überwiegend durch Daten des entfernten Radars. Auf die Verwendung der Daten des Flugkörperradars - soweit bereits vorhanden - kann verzichtet werden. In einer sich an die Einweisungsphase anschließenden Mittelphase erfolgt die Richtungssteuerung des Flugs des Flugkörpers zweckmäßigerweise nur oder überwiegend durch eine Verbindung der Daten des entfernten Radars und des Flugkörperradars. Einweisungsphase und Mittelphase können durch den Zeitpunkt voneinander abgegrenzt werden, an dem das Flugkörperradar das Ziel erfasst beziehungsweise als solches erkennt und die Entfernung zum Ziel bestimmt hat. In einer dritten optionalen Endphase kann die Richtungssteuerung des Flugs des Flugkörpers nur oder überwiegend durch eine Verbindung der Daten des Flugkörperradars und eines bildauflösenden Suchsystems des Flugkörpers, insbesondere eines Infrarot-Suchsystems des Flugkörpers, erfolgen. Im Prinzip kann die Richtungssteuerung in der Endphase auch allein durch das interne Suchsystem erfolgen, wobei eine Unterstützung durch die Daten des Flugkörperradars jedoch insbesondere für die Steuerung des Lenkausschlags, also die Flugagilität, vorteilhaft ist. Mittelphase und Endphase können durch den Zeitpunkt voneinander abgegrenzt werden, an dem das flugkörperinterne Suchsystem das Ziel als solches erkennt und die Richtung des Ziels relativ zu einer Flugkörperachse bestimmt hat.

Der Flugkörper ist insofern zweckmäßigerweise mit einem bildauflösenden Infrarot-Suchsystem ausgestattet, mit dessen Daten der Flugkörper zumindest in einer Endphase des Anflugs zum Ziel gesteuert wird. Ein präziser Anflug auch bei zunächst schlechten Sichtbedingungen kann erreicht werden, wenn der Flugkörper vor einer optischen Sichtbarkeit des Ziels in IR-Suchsystem zumindest überwiegend radargesteuert den Zielbereich anfliegt und nach einer optischen Erfassung des Ziels durch das IR-Suchsystem zumindest überwiegend optisch gesteuert das Ziel anfliegt. Die Radarsteuerung erfolgt zweckmäßigerweise unter Verwendung der vom Flugkörperradar generierten Daten des Ziels. Eine überwiegende Ansteuerung des Ziels mit dem einen oder anderen System kann dadurch erfolgen, dass die Radardaten beziehungsweise optischen Daten in einer Zustandsschätzung höher als die Daten des entsprechenden anderen Systems bewertet werden.

Vor einer zweidimensionalen Erfassung des Ziels durch ein Suchsystem wird das Suchsystem das Ziel in einem Raumbereich suchen und den Raumbereich zweckmäßigerweise abscannen. Eine solche Suche kann vereinfacht beziehungsweise beschleunigt werden, wenn die Lage des vom Flugkörperradar ermittelten zweiten Aufenthaltsbereichs des Ziel dazu verwendet wird, eine Blickrichtung des Suchsystems relativ zur Flugkörperachse zu steuern. Zweckmäßigerweise wird auch die Lage des ersten Aufenthaltsbereichs hierzu verwendet beziehungsweise die Lage des Zielbereichs, beispielsweise relativ zur Flugkörperachse. Vor der Sichtbarkeit des Ziels für das Suchsystem kann die Ausrichtung des Suchsystems in den Zielbereich gesteuert werden, wobei die Ausrichtung des Suchsystems während des Anflugs und vor der optischen Zielerfassung in den Zielbereich gehalten wird.

Wurde das Ziel zweidimensional durch das Suchsystem erfasst und fliegt der Flugkörper anhand der vom Suchsystem erzeugten Daten auf das Ziel zu, so ist es vorteilhaft, die Entfernung zum Ziel zu kennen und diese bei der Steuerung des Flugs zu berücksichtigen. Insofern ist es vorteilhaft, wenn die vom Flugkörperradar ermittelte Entfernung und/oder Annäherungsgeschwindigkeit des Flugkörpers zum Ziel als Parameter der Flugsteuerung verwendet wird. Wird der Flugkörper beispielsweise durch Proportionalnavigation auf das Ziel zugesteuert, so kann die Sichtliniendrehrate als Lenkparameter verwendet werden. Diese kann auf Null geregelt werden, um auf Kollisionskurs mit dem Ziel zu verbleiben. Ein Ruderausschlag ist hierbei abhängig von der Sichtliniendrehrate des Ziels und zweckmäßigerweise der Entfernung und/oder Annäherungsgeschwindigkeit des Flugkörpers zum Ziel.

Die Erfindung ist außerdem gerichtet auf einen Flugkörper, der erfindungsgemäß mit einem Entfernungsradar, einem zweidimensional auflösenden IR- Suchsystem, Steuerrudern, zum Steuern eines gelenkten Flugs, und einer Steuereinheit ausgestattet ist, die dazu vorbereitet ist, aus den Daten des Entfernungsradars und des IR- Suchsystems Lenksignale zu erzeugen und mit diesen die Steuerruder anzusteuern. Bei fehlender Sicht des IR- Suchsystems auf das Ziel kann der Flugkörper zunächst unter Verwendung der Daten aus dem Entfernungsradar zum Ziel gesteuert werden. Das Ziel kann auch bei ungünstigen Witterungsbedingungen präzise angesteuert werden.

Liegt das Ziel noch außerhalb der Reichweite des Entfernungsradars, so ist es vorteilhaft, wenn die Steuereinheit dazu vorbereitet ist, Daten von einem entfernt angeordneten Radar, beispielsweise einem Bodenradar, zu verarbeiten. Ein vom Bodenradar ermittelter erster Aufenthaltsbereich kann mit einem durch das Entfernungsradar ermittelten zweiten Aufenthaltsbereich zu einem Zielbereich verbunden werden, auf den der Flugkörper zu gesteuert wird.

Vorteilhafterweise ist das Entfernungsradar mit zumindest drei nach vorne ausgerichteten Radarsensoren ausgestattet. Der Abtastbereich der Radarsensoren liegt zweckmäßigerweise jeweils nur in einem Raumsegment von zumindest drei nebeneinander liegenden Raumsegmenten.

Eine günstige Anordnung von mehreren Radarsensoren kann erreicht werden, wenn diese im Bereich eines Übergangskonus zwischen einem Flugkörperkopf und einem Flugkörperrumpf angeordnet sind. Die Radarsensoren sind zweckmäßigerweise fest an einem Außengehäuse des Flugkörpers befestigt, sodass deren Blickrichtung unbeweglich zur Flugkörperachse ausgerichtet ist.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammengefasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Flugkörper in Form einer Lenkrakete mit einem Suchkopf, einem Wirkteil und einem Raketenmotor,
- FIG 2: den fliegenden Flugkörper, der von einem Bodenradar auf ein von einer Wolke verdecktes Ziel eingewiesen wird,
- FIG 3: den Flugkörper im Anflug auf das Ziel, dessen Position aus zwei Aufenthaltsbereichen abgeschätzt wird und
- FIG 4: den Flugkörper im Vorbeiflug am Ziel vorbei bei einem auf das Ziel ausgerichteten Auslösen einer Wirkladung des Wirkteils.

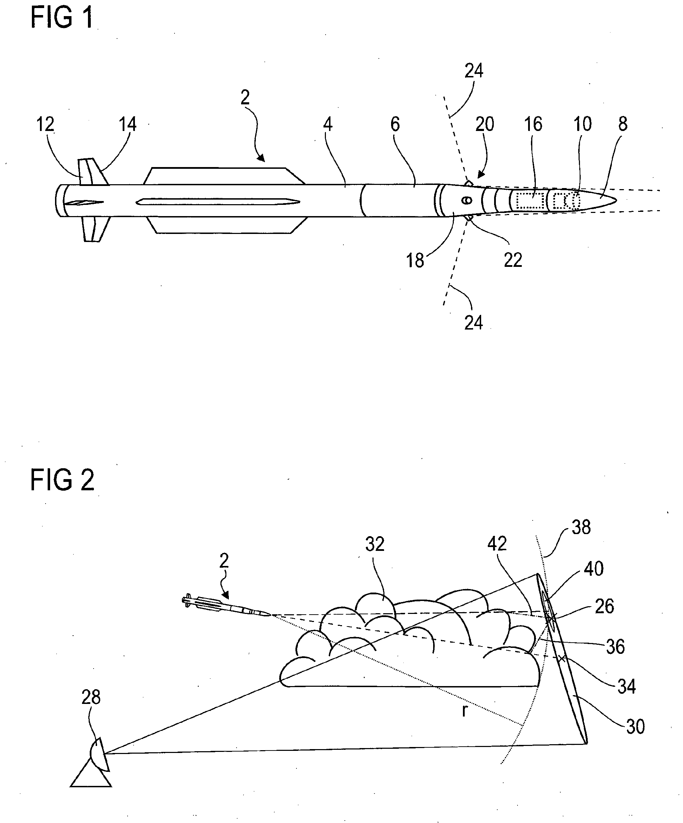

FIG 1 zeigt einen Flugkörper 2 in Form einer Lenkrakete zur bodengestützten Luftabwehr. Der Flugkörper 2 ist mit einem Raketenmotor 4, einem Wirkteil 6, der eine Sprengladung enthält, und einem Suchkopf 8 ausgestattet, der ein IR-Suchsystem 10 zum Erfassen eines im infraroten Spektralbereich leuchtenden Ziels zweidimensional aufgelöst im vorderen Raumbereich vor dem Flugkörper 2 aufweist. Zum Lenken des Flugkörpers 2 auf das Ziel zu enthält der Flugkörper 2 Steuerruder 12 an Steuerflügeln 14, die im Heck des Flugkörpers 2 angeordnet sind und von einer Steuereinheit 16 angesteuert werden. In einem Übergangsbereich 18 zwischen dem Suchkopf 8 und dem radial hierzu dicker ausgeführten und hinter dem Suchkopf 8 liegenden Rumpfteil ist ein Flugkörperradar 20 angeordnet. Dieses in dem konischen Übergangsbereich 18 angeordnete System umfasst vier Radarsensoren 22, die jeweils ein Raumsegment 24 sensorisch erfassen. Die Raumsegmente 24 sind in FIG 1 gestrichelt angedeutet und haben jeweils eine azimutale Ausdehnung von 90° und sind einander angrenzend benachbart symmetrisch um die Längsachse des Flugkörpers 2 beziehungsweise Flugkörperachse angeordnet. Ihr Elevationswinkel beträgt von 110° relativ zur Flugkörperachse bis -3° nach vorne hin, sodass sich die Raumsegmente 24 nach vorne hin um etwa 6° überschneiden.

FIG 2 zeigt ein nur mit einem Kreuz angedeutetes fliegendes Ziel 26, beispielsweise eine Rakete mit einem Sprengkopf, die vom Flugkörper 2 bekämpft werden soll. Hierzu wird das Ziel 26 von einem vom Flugkörper 2 entfernten Radar 28 als solches erfasst. Das Radar 28 ist in diesem Ausführungsbeispiel ein Bodenradar 28, kann jedoch auch ein luftgestütztes Radar eines Flugzeugs sein. Das Ziel wird vom Bodenradar 28 erfasst und als ein zu bekämpfendes Objekt klassifiziert. Zur Bekämpfung wird der Flugkörper 2 von einer Plattform aus gestartet, die eine bodengebundene Plattform oder eine fliegende Plattform sein kann. Nach Erfassung des Ziels 26 durch das Bodenradar 28 werden dem Flugkörper 2 Einweisungsdaten vom Bodenradar 28 geschickt. Die Daten enthalten Informationen zu einem ersten Aufenthaltsbereich 30, innerhalb dessen das Bodenradar 28 das Ziel 26 ausgemacht hat. Die Erfassung des Ziels 26 durch das Bodenradar 28 ist hinsichtlich der Entfernung vom Bodenradar 28 zum Ziel 26 recht genau, wobei jedoch die Winkelbestimmung durch das Bodenradar 28 deutlich ungenauer erfolgt. Der Aufenthaltsbereich 30 hat daher die Form eines plattgedrückten Rotationsellipsoids, das in FIG 2 vereinfacht durch eine Ellipse dargestellt ist. Die Ausdehnung des Rotationsellipsoids ist senkrecht zur Richtung zum Bodenradar 28 erheblich größer als in Richtung zum Bodenradar 28.

Die Steuerung des Flugkörpers 2 zum Ziel 26 erfolgt in drei zeitlich hintereinander liegenden Phasen. In der ersten Einweisungsphase werden Zielkoordinaten des Ziels 26 ausschließlich aus den Einweisungsdaten des Bodenradars 28 erzeugt. Vereinfacht ausgedrückt, wird der Flug des Flugkörpers 2 ausschließlich anhand der Einweisungsdaten des Bodenradars 28 gesteuert. In der anschließenden Mittelphase werden Einweisungsdaten des Bodenradars 28 mit Daten des Flugkörperradars 20 fusioniert. In dieser Mittelphase oder Radarfusionsphase erfolgt die Steuerung des Flugs des Flugkörpers 2 anhand von Fusionsdaten, die aus der Verarbeitung der Daten des Bodenradars 28 und des Flugkörperradars 20 gewonnen werden. In der dritten und letzten Phase, der Endphase erfolgt die Flugsteuerung zumindest überwiegend anhand der Daten des IR-Suchsystems 10 des Flugkörpers 2. Auf die Verwendung der Einweisungsdaten des Bodenradars 28 kann verzichtet werden, und die Radardaten des Flugkörperradars 20 werden lediglich zur Unterstützung herangezogen, beispielsweise zur Entfernungsmessung zur Steuerung der Agilität. Die Richtungsbestimmung zum Ziel erfolgt zweckmäßigerweise ausschließlich über das flugkörpereigene Suchsystem 10.

Bei dem in FIG 2 dargestellten Ausführungsbeispiel ist die Sicht des Flugkörpers 2 auf das Ziel 26 durch eine Wolke 32 verstellt. Der Flugkörper 2 fliegt in der ersten Einweisungsphase zunächst ausschließlich mit Einweisungsdaten des Bodenradars 28 in Richtung zum Aufenthaltsbereich 30. Wo sich das Ziel 26 innerhalb des Aufenthaltsbereichs 30 befindet, ist zunächst noch unklar. Daher steuert der Flugkörper 2 zunächst einen vorläufigen Zielpunkt 34 an, der, vereinfacht gesprochen, im geometrischen Mittelpunkt des Aufenthaltsbereichs 30 liegen kann. In FIG 2 ist diese Flugroute durch eine eng gestrichelte Linie angegeben.

Würde der Flugkörper 2 auf dieser Flugroute die Wolke 32 durchfliegen, so würde er kurz vor dem theoretischen Zielpunkt 34 Sicht auf das eigentliche Ziel 26 erhalten. Der durch eine strichpunktierte Linie angedeutete Sichtabstand 36 zum Ziel 26 ist in diesem Fall relativ gering. Das Infrarot-Suchsystem 10 würde das Ziel 26 zwar erfassen, und der Flugkörper 2 würde anhand der Daten des Suchsystems 10 versuchen, auf das Ziel 26 einzuschwenken. Durch den geringen Sichtabstand 36, der unterhalb einer Mindestaufschaltreichweite liegt, also einer Mindestentfernung, bei der das Ziel optisch aufgefasst werden muss, um eine hohe Trefferquote zu erhalten, wird die Trefferquote beziehungsweise Trefferwahrscheinlichkeit sehr gering sein. Der Flugkörper 2 wird am Ziel 26 vorbeifliegen.

Um eine solche Fehlsteuerung zu vermeiden, ist der Flugkörper 2 mit dem Flugkörperradar 20 ausgestattet. Während der Einweisungsphase sendet das Flugkörperradar 20 aktiv Strahlung aus und erfasst schließlich das Ziel 26. Die Erfassung geschieht ausschließlich über eine Entfernungserfassung, sodass die Entfernung r des Flugkörpers 2 zum Ziel 26 bestimmt wird. Aus dieser Entfernung r ergibt sich ein zweiter Aufenthaltsbereich 38, in dem sich das Ziel 26 mit hoher Wahrscheinlichkeit allein aus den Daten des Flugkörperradars 20 befindet. Der Aufenthaltsbereich 38 hat die Form einer Kugelkalotte, deren radiale Dicke von der Entfernungsmessgenauigkeit des Flugkörperradars 20 abhängt. Zur Vereinfachung der Darstellung ist dieser Aufenthaltsbereich 38 in FIG 2 durch einen gepunkteten Kreisabschnitt dargestellt.

Aus dem Vergleich der beiden Aufenthaltsbereiche 30, 38 wird deutlich, dass die Aufenthaltswahrscheinlichkeit des Ziels 26 im aus den Daten des Bodenradars 28 ermittelten theoretischen Zielpunkt 34 gering ist. Denn dieser Zielpunkt 34 liegt deutlich weiter entfernt, als die Entfernungsmessung des Flugkörperradars 20 ergeben hat. Daher werden die Daten des Bodenradars 28 mit den Daten des Flugkörperradars 20 zusammengeführt und zu einem Zielbereich 40 verarbeitet. Dies kann dadurch geschehen, dass die Daten beider Radare 20, 28 einem Algorithmus zur Schätzung der Aufenthaltswahrscheinlichkeit des Ziels 26, beispielsweise einem Kalman-Filter als Eingangsdaten übergeben werden, und hieraus die Aufenthaltswahrscheinlichkeit des Ziels 26 berechnet wird. Insofern werden die ortsaufgelösten Aufenthaltswahrscheinlichkeiten des Ziels 26 in beiden Aufenthaltsbereichen 30, 38 im Flugkörper 2 zu einer übergeordneten ortsaufgelösten Aufenthaltswahrscheinlichkeit des Zielbereichs 40 zusammengeführt. Im Speziellen wird die ortsaufgelöste Aufenthaltswahrscheinlichkeit des Ziels 26 im ersten Aufenthaltsbereich 30, die vom Bodenradar 28 geliefert wird, mit der aus der Entfernungsmessung resultierenden Aufenthaltswahrscheinlichkeit des Ziels 26 im zweiten Aufenthaltsbereich 38 verbunden.

Die Aufenthaltsbereiche 30, 38 können begrenzte oder unbegrenzte Gebilde sein und enthalten jeweils eine Aufenthaltswahrscheinlichkeitsverteilung des Ziels 26 im Raum. Die Begriffsbildung der Bereiche 30, 38, 40 dient lediglich der besseren Darstellbarkeit. Ein Bereich kann ein räumliches Gebilde sein, in dem die Aufenthaltswahrscheinlichkeit des Ziels 26 im Raum über einem Grenzwert liegt. Dieses Gebilde kann, muss jedoch nicht im Flugkörper 2 explizit gebildet werden.

Zu Beginn der Mittelphase beziehungsweise Radarfusionsphase wird der Flug des Flugkörpers 2 daher korrigiert, sodass er auf den Zielbereich 40 zufliegt. Dies ist in FIG 2 durch die lang gestrichelte Linie dargestellt. Der exakte Zielpunkt, der innerhalb des Zielbereichs 40 angesteuert wird, kann der geometrische Mittelpunkt oder ein anderer Punkt mit einer größeren Aufenthaltswahrscheinlichkeit sein, beispielsweise mit der maximalen Aufenthaltswahrscheinlichkeit entsprechend der aktuellen Zustandsschätzung.

Während der Mittelphase fliegt der Flugkörper 2 gesteuert durch die von beiden Radaren 20, 28 fusionierten Daten auf den Zielbereich 40 zu. Bei der Darstellung aus FIG 2 verlässt er die Wolke 32 kurz vor Erreichen des Zielbereichs 40 und erhält freie Sicht auf das Ziel 26. Der Sichtabstand 42 beziehungsweise die Zielverdeckungsentfernung, ab der das Ziel 26 optisch für das flugkörpereigene Suchsystem 10 sichtbar wird, ist hierbei zwar ebenfalls sehr klein und nicht wesentlich größer als der Sichtabstand 36. Die vorzunehmende Flugrichtungskorrektur ist jedoch erheblich kleiner, sodass die Mindestaufschaltreichweite kleiner ist als zuvor. Der Sichtabstand 42 ist größer als die Mindestaufschaltreichweite, und der Flugkörper 2 kann in seinem Flug auf das Ziel 26 einschwenken und dieses direkt treffen.

Während der Mittelphase erfolgte noch keine Aufschaltung des flugkörperinternen Suchsystems 10 auf das Ziel 26, dieses wurde also durch das Suchsystem 10 noch nicht erfasst. Die ungefähre Lage des Ziels 26 im Zielbereich 40 ist jedoch bekannt. Diese Lage und/oder die Ausdehnung des Zielbereichs 40 werden zur Steuerung der Ausrichtung des Suchsystems 10 verwendet. So kann ein Suchraum des Suchsystems 10, der von diesem abgescannt wird, sich beispielsweise auf den Zielbereich 40 beschränken oder einen anderen Bereich, der in Abhängigkeit von der Geometrie des Zielbereichs 40 bestimmt wird, beispielsweise in einer vorgegebenen Weise über den Zielbereich 40 hinausgeht.

Während der Endphase werden die Daten des internen Suchsystems 10 zur Richtungssteuerung des Flugkörpers 2 verwendet, sodass nach Aufschalten des Suchsystems 10 auf das Ziel 26 die Endphase des Zielanflugs beginnt. In dieser Endphase werden die Daten des flugkörperinternen Suchsystems 10 zur Steuerung des Flugkörpers 2 zum Ziel 26 verwendet werden. Die vom Flugkörperradar 20 ermittelte Entfernung zum Ziel und/oder die Annäherungsgeschwindigkeit des Flugkörpers 2 zum Ziel 26 können als zusätzlicher Parameter der Flugsteuerung verwendet werden.

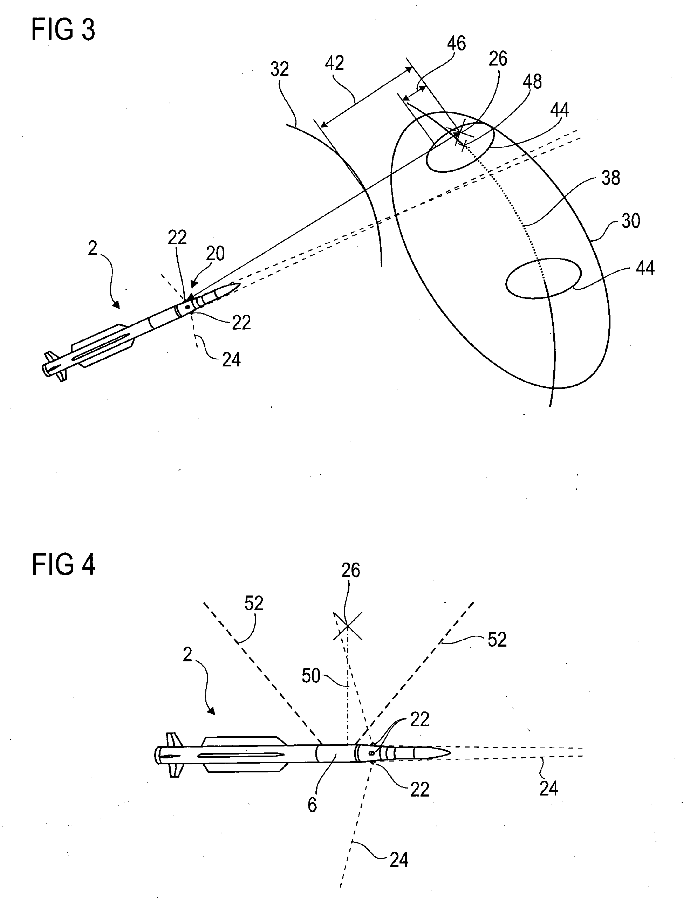

FIG 3 zeigt ein weiteres Ausführungsbeispiel eines Aufenthaltsbereichs 30, der aus Daten eines entfernt angeordneten Radars ermittelt wurde, und eines Aufenthaltsbereichs 38, der aus Daten des Flugkörperradars 20 des Flugkörpers 2 ermittelt wurde. Die nachfolgende Beschreibung beschränkt sich im Wesentlichen auf die Unterschiede zum Ausführungsbeispiel aus FIG 2, auf das bezüglich gleichbleibender Merkmale und Funktionen verwiesen wird. Um nicht bereits Beschriebenes mehrfach ausführen zu müssen, sind generell alle Merkmale eines vorangegangenen Ausführungsbeispiels im jeweils folgenden Ausführungsbeispiel übernommen, ohne dass sie erneut beschrieben sind, es sei denn, Merkmale sind als Unterschiede zu einem oder mehreren vorangegangenen Ausführungsbeispielen beschrieben.

Zur Vereinfachung der Darstellung ist der Aufenthaltsbereich 30 in FIG 3 wiederum als Ellipse dargestellt und der Aufenthaltsbereich 38 als Kreisbogensegment. Es ist sichtbar, dass der Aufenthaltsbereich 38 den Aufenthaltsbereich 30 in mehreren Zielbereichen 44 durchstößt beziehungsweise kreuzt. Bei der Darstellung aus FIG 3 ist das in der Form dargestellt, dass der Aufenthaltsbereich 38 im Innenbereich zwischen den beiden Zielbereichen 44 vom Aufenthaltsbereich 30 verdeckt wird. Dies ist durch eine punktierte Darstellung des Aufenthaltsbereichs 38 gezeigt. Im Außenbereich des Aufenthaltsbereichs 30 liegt der Aufenthaltsbereich 38 jedoch vor dem Aufenthaltsbereich 30, was durch durchgezogene Linien dargestellt ist. Die Anordnung vor oder hinter kann aus Sicht des Flugkörpers 2 verstanden werden.

Bei einer theoretisch gedachten Kugelkalottenform des Aufenthaltsbereichs 38 und einer Kreisfläche des Aufenthaltsbereichs 30, werden die Zielbereiche 44 kreisförmig in einen Zielbereich vereint. Je nach radialer Dicke der beiden Aufenthaltsbereiche 30, 38 ist dieser Zielbereich 44 geometrisch komplexer, wobei die Komplexität durch die unterschiedlichen Aufenthaltswahrscheinlichkeiten im Zentrum beziehungsweise den Randbereichen der Aufenthaltsbereiche 30, 38 weiter zunimmt. Die Darstellung aus FIG 3 ist daher nur als schematische Darstellung zu verstehen, die deutlich macht, dass eine Datenfusion von Daten des Flugkörperradars 20 und des Bodenradars 28 auch zu einem großen und komplexen Zielbereich 44 führen kann. Eine recht genaue Ansteuerung des Ziels 26 kann hierdurch behindert werden.

Um dennoch einen präzisen Zielanflug zu erreichen, ist das Flugkörperradar 20 mit der Mehrzahl der Radarsensoren 22 ausgestattet. Bei der Darstellung aus FIG 3 ist deutlich, dass der untere Zielbereich 44 von dem unteren Radarsensor 22 erfasst werden würde - wenn denn dort das Ziel 26 läge - und der obere Zielbereich 44 durch den oberen Radarsensor 22. Da eine Zielerfassung jedoch nur durch einen der Radarsensoren 22 zustande kommt, ist eindeutig, in welchem Raumsegment 24 sich das Ziel 26 befindet. Selbst bei einer Überschneidung der Raumsegmente 24 kann das Ziel 26 eindeutig lokalisiert werden, da die Überschneidungsbereiche der Raumsegmente 24 zweckmäßigerweise deutlich kleiner sind als die Raumsegmente 24 selbst. Insofern wird das Raumsegment 24 mit der höchsten Aufenthaltswahrscheinlichkeit des Ziels 26 in diesem Raumsegment 24, kurz: Segmentwahrscheinlichkeit, bestimmt. Diese Segmentwahrscheinlichkeit wird bei der Bestimmung der ortsaufgelösten Aufenthaltswahrscheinlichkeit des Ziels 26 im Zielbereich 40 verwendet.

Bei dem in FIG 3 gezeigten Ausführungsbeispiel liegt das Ziel 26 im oberen Zielbereich 44, sodass aus den Daten des Flugkörperradars 20 der Zielbereich 44 auf den oberen Zielbereich 44 beschränkt werden kann. Der Flugkörper 2 kann in der Mittelphase nun auf diesen Zielbereich 44 gesteuert werden. Bei Austritt aus der Wolke 32 ist der Sichtabstand 42 beziehungsweise die Zielverdeckungsentfernung vom Flugkörper 2 zum Ziel 26 kleiner als die Mindestaufschaltreichweite 46, sodass das Ziel 26 getroffen werden kann. Der Flugkörper 2 schwenkt daher nach Erfassung des Ziels 26 durch das flugkörperinterne Suchsystem 10 im Übergang von der Mittelphase in die Endphase vom theoretischen Zielpunkt 48 des Zielbereichs 44 auf das tatsächliche Ziel 26 und fliegt dieses nun konkret an.

Bei den in den Figuren 2 und 3 gezeigten. Ausführungsbeispielen ist eine Eigenbewegung des Ziels 26 nicht berücksichtigt. Diese ist jedoch unkritisch, da sowohl das Bodenradar 28 als auch das Flugkörperradar 20 permanent Zieldaten liefern, sodass die Aufenthaltsbereiche 30, 38 beziehungsweise der Zielbereich 40, 44 stets aktuell berechnet werden kann, beispielsweise durch Zustandsschätzung. Entsprechend dieser Berechnung beziehungsweise Datenfusion wird das Ziel 26 in seiner Bewegung ständig vom Flugkörper 2 verfolgt.

Bei besonders schlechten Sichtverhältnissen kann es vorkommen, dass die Ansteuerung des Ziels 26 ohne eine Endphase stattfinden muss, da das bordeigene Suchsystem 10 das Ziel 26 wegen schlechter Sicht nicht erfassen kann. Befindet sich das Ziel 26 beispielsweise in einer Wolke, so kann die Sicht auf das Ziel 26 dauerhaft verstellt sein. Ein Zielanflug kann dann auch ohne Mitwirkung des Infrarot-Suchsystems 10 stattfinden.

FIG 4 zeigt ein solches Ausführungsbeispiel, in dem der Flugkörper 2 das Ziel 26 ohne optische Sicht anfliegt. Der Anflug ist naturgemäß nicht so exakt wie unter Verwendung des Suchsystems 10, sodass ein Vorbeiflug erfolgt, wie in FIG 4 dargestellt ist. Der Flugkörper 2 fliegt in einem geringsten Abstand 50 am Ziel 26 vorbei. Aus der Erfassung des Ziels 26 durch einen der Radarsensoren 22 ist deutlich, in welchem Raumsegment 24 sich das Ziel 26 befindet. Bei dem in FIG 4 dargestellten Ausführungsbeispiel befindet sich das Ziel 26 im nach oben dargestellten Raumsegment 24 des in FIG 4 nach oben ausgerichteten Radarsensors 22. Insofern ist die aktuelle Entfernung des Flugkörpers 2 zum Ziel 26 sowie das Raumsegment 24, in dem sich das Ziel 26 relativ zur Flugkörperachse des Flugkörpers 2 befindet, stets bekannt. Die Entfernung zum Ziel wird nun permanent überwacht. Sie nimmt stetig ab und erreicht im Moment des Vorbeiflugs ihr Minimum. Im Moment des Wiederanstiegs der Entfernung ist deutlich, dass der Flugkörper 2 am Ziel 26 vorbeigeflogen ist. Beträgt der minimale Abstand 50 des Flugkörpers 2 zum Ziel 26 weniger als ein vorgegebener maximaler Bekämpfungsabstand, so wird der Wirkteil 6 des Flugkörpers 2 im Vorbeiflug gezündet, und eine Splitterladung wird vom Flugkörper 2 zur Bekämpfung des Ziels 26 ausgestoßen. Insofern wird das Flugkörperradar 20 als richtungssensitiver Annährungssensor verwendet zum Steuern eines richtungsabhängigen Zündens der Wirkladung des Flugkörpers 2.

Bei dem in FIG 4 gestellten Ausführungsbeispiel ist der Wirkbereich 52, in den die Wirkladung des Wirkteils 6 überwiegend ausgestoßen wird, durch zwei dick gestrichelte Linien dargestellt. Die Wirkladung könnte in einer einfachen Ausführungsform gürtelförmig rund um den Flugkörper 2 ausgestoßen werden, sodass eine Rundumbekämpfung des Ziels 26 erfolgt. Eine effektivere Bekämpfung kann erreicht werden, wenn der Wirkteil 6 gerichtet ausgelöst wird. Die gerichtete Auslösung ist zweckmäßigerweise in eine Mehrzahl von Sektoren möglich, die insbesondere in ihrer azimutalen Ausdehnung den Raumsegmenten 24 entsprechen können. Bei dem in FIG 4 gezeigten Ausführungsbeispiel wird der Wirkteil 6 nur in den oberen Sektor entsprechend dem oberen Raumsegment 24 ausgelöst, in dem sich das Ziel 26 während des Vorbeiflugs befindet. Durch diese gerichtete Bekämpfung kann eine relativ hohe Bekämpfungsentfernung erreicht werden.

### Bezugszeichenliste

- 2: Flugkörper
- 4: Raketenmotor
- 6: Wirkteil.
- 8: Suchkopf
- 10: Suchsystem
- 12: Steuerruder
- 14: Steuerflügel
- 16: Steuereinheit
- 18: Übergangsbereich
- 20: Flugkörperradar
- 22: Radarsensor
- 24: Raumsegment
- 26: Ziel
- 28: entferntes Radar, Bodenradar
- 30: Aufenthaltsbereich
- 32: Wolke
- 34: Zielpunkt
- 36: Sichtabstand
- 38: Aufenthaltsbereich
- 40: Zielbereich
- 42: Sichtabstand
- 44: Zielbereich
- 46: Mindestaufschaltreichweite
- 48: Zielpunkt
- 50: Abstand
- 52: Wirkbereich
- r: Entfernung

## Patentansprüche

1. Verfahren zum Steuern eines Flugkörpers (2) zu einem fliegenden Ziel (26), bei dem ein vom Flugkörper (2) entferntes Radar (28) das Ziel (26) erfasst und Daten zu einem ersten Aufenthaltsbereich (30) des Ziels (26) an den Flugkörper (2) sendet, der Flugkörper (2) aus den Daten eines eigenen Flugkörperradars (20) einen zweiten Aufenthaltsbereich (38) des Ziels (26) bestimmt, beide Aufenthaltsbereiche (30, 38) zu einem Zielbereich (40, 44) verarbeitet und zum Zielbereich (40, 44) fliegt.

2. Verfahren nach Anspruch 1,
**dadurch gekennzeichnet,**
**dass** ortsaufgelöste Aufenthaltswahrscheinlichkeiten des Ziels (26) in beiden Aufenthaltsbereichen (30, 38) im Flugkörper (2) zu einer übergeordneten ortsaufgelösten Aufenthaltswahrscheinlichkeit zusammengeführt werden.

3. Verfahren nach Anspruch 1 oder 2,
**dadurch gekennzeichnet,**
**dass** das Flugkörperradar (20) eine Entfernung zum Ziel (26) misst und die ortsaufgelöste Aufenthaltswahrscheinlichkeit des ersten Aufenthaltsbereichs (30) mit der aus der Entfernungsmessung resultierenden Aufenthaltswahrscheinlichkeit verbunden wird.

4. Verfahren nach einem der vorhergehenden Ansprüche,
**dadurch gekennzeichnet,**
**dass** der Flugkörper (2) zumindest drei nach vorne ausgerichtete Radarsensoren (22) aufweist, und diese jeweils nur ein Raumsegment (24) von zumindest drei nebeneinander liegenden Raumsegmenten (24) überwachen.

5. Verfahren nach Anspruch 4,
**dadurch gekennzeichnet,**
**dass** aus den Signalen das Raumsegment (24) mit der höchsten Segmentwahrscheinlichkeit ermittelt wird, mit der sich das Ziel (26) in diesem Raumsegment (24) befindet, und die Segmentwahrscheinlichkeit bei der Bestimmung der ortsaufgelösten Aufenthaltswahrscheinlichkeit des Ziels (26) im Zielbereich (40, 44) verwendet wird.

6. Verfahren nach Anspruch 4 oder 5,
**dadurch gekennzeichnet,**
**dass** das Flugkörperradar (20) als richtungssensitiver Annäherungssensor verwendet wird zum Steuern eines richtungsabhängigen Zündens einer Wirkladung des Flugkörpers (2) innerhalb einer vorbestimmten Entfernung des Flugkörpers (2) zum Ziel (26).

7. Verfahren nach Anspruch 6,
**dadurch gekennzeichnet,**
**dass** bei einem Flug des Flugkörpers (2) am Ziel (26) vorbei das Raumsegment (24) bestimmt wird, in dem sich das Ziel (26) befindet, und eine Zündung der Wirkladung zumindest überwiegend in dieses Raumsegment (24) hinein gesteuert wird.

8. Verfahren nach einem der vorhergehenden Ansprüche,
**dadurch gekennzeichnet,**
**dass** eine Richtungssteuerung des Flugs des Flugkörpers (2) in einer Einweisungsphase durch Daten nur des entfernten Radars (28) erfolgt, in einer anschließenden Mittelphase nur durch eine Verbindung der Daten des entfernten Radars (28) und des Flugkörperradars (20) erfolgt und in einer daran anschließenden Endphase durch eine Verbindung der Daten des Flugkörperradars (20) und eines bildauflösenden IR-Suchsystems (10) des Flugkörpers (2) erfolgt.

9. Verfahren nach einem der vorhergehenden Ansprüche,
**dadurch gekennzeichnet,**
**dass** der Flugkörper (2) ein zweidimensional auflösendes IR-Suchsystem (10) aufweist und der Flugkörper (2) vor einer optischen Sichtbarkeit des Ziels (26) im IR-Suchsystem (10) zumindest überwiegend radargesteuert den Zielbereich (40, 44) anfliegt und nach einer optischen Erfassung des Ziels (26) durch das IR-Suchsystem (10) zumindest überwiegend optisch gesteuert das Ziel (26) anfliegt.

10. Verfahren nach einem der vorhergehenden Ansprüche,
**dadurch gekennzeichnet,**
**dass** der Flugkörper (2) ein zweidimensional auflösendes IR-Suchsystem (10) aufweist und die Lage des vom Flugkörperradar (20) ermittelten zweiten Aufenthaltsbereichs (38) des Ziels (26) dazu verwendet wird, eine Blickrichtung des IR-Suchsystems (10) relativ zur Flugkörperachse zu steuern.

11. Verfahren nach einem der vorhergehenden Ansprüche,
**dadurch gekennzeichnet,**
**dass** der Flugkörper (2) ein zweidimensional auflösendes IR-Suchsystem (10) aufweist und der Flugkörper (2) mit Daten des IR-Suchsystems (10) durch Proportionalnavigation zum Ziel (26) gesteuert wird, und die vom Flugkörperradar (20) ermittelte Entfernung und/oder Annäherungsgeschwindigkeit des Flugkörpers (2) zum Ziel (26) als Parameter der Flugsteuerung verwendet wird.

12. Verfahren nach Anspruch 11,
**dadurch gekennzeichnet,**
**dass** der Parameter als Agilitätsparameter einer Rudersteuerung verwendet wird.

13. Flugkörper (2) mit einem Flugkörperradar (20), einem zweidimensional auflösenden IR-Suchsystem (10), Steuerrudern (12) zum Steuern eines gelenkten Flugs und einer Steuereinheit (16), die dazu vorbereitet ist, aus den Daten des Flugkörperradars (20) und des IR- Suchsystems (10) Lenksignale zu erzeugen und mit diesen die Steuerruder (12) anzusteuern.

14. Flugkörper nach Anspruch 13,
**dadurch gekennzeichnet,**
**dass** das Flugkörperradar (20) zumindest drei nach vorne ausgerichtete Radarsensoren (22) aufweist, deren Abtastbereich jeweils nur in einem Raumsegment (24) von zumindest drei nebeneinander liegenden Raumsegmenten (24) liegt.

15. Flugkörper nach Anspruch 14,
**dadurch gekennzeichnet,**
**dass** die Radarsensoren (22) im Bereich eines Übergangskonus zwischen einem Flugkörperkopf (8) und einem Flugkörperrumpf angeordnet sind.
